# EUROPEAN PATENT SPECIFICATION

(11) **EP 3 070 958 B1**
(45) Date of publication and mention of the grant of the patent: **15.09.2021**
(21) Application number: 15805376.9
(22) Date of filing: 31.07.2015
(51) Int. Cl.: H04N 21/472, H04N 21/431, H04N 21/442

(54) **MEDIA PLAYER PRELOADING PROGRESS BAR**
MEDIA-PLAYER MIT FORTSCHRITTSBALKEN FÜR VORZEITIGES LADEN
LECTEUR MULTIMÉDIA AVEC BARRE DE PROGRESSION POUR PRÉ-CHARGEMENT

(30) Priority: 23.01.2015 CN 201510037273
(43) Date of publication of application: 21.09.2016
(73) Proprietor: Huawei Technologies Co., Ltd., Longgang Shenzhen, Guangdong 518129 (CN); Ekstrand, Simon, Eslov 999027 (SE)
(72) Inventor: EKSTRAND, Simon, Eslov 999027 (SE); LIU, Zhilin, Shenzhen, Guangdong 518129 (CN)
(74) Representative: Isarpatent
(86) International application number: PCT/CN2015/085687
(87) International publication number: WO 2016/115864

(56) References cited:
- EP-A1- 2 525 281
- CN-A- 103 686 303
- CN-A- 104 081 761
- CN-A- 104 683 857
- US-A1- 2007 192 723
- US-A1- 2013 235 044
- US-A1- 2014 033 038
- US-A1- 2014 075 317
- US-B1- 8 229 287
- Matt Elliott: "Return to YouTube's old way of buffering full videos - CNET", , 30 August 2013 (2013-08-30), pages 1-3, XP055289093, Retrieved from the Internet: URL:http://www.cnet.com/how-to/return-to-y outubes-old-way-of-buffering-full-videos/ [retrieved on 2016-07-18]
- SABINE MUSIL ED - THOMAS GRECHENIG ET AL: "Beyond bars and hour glasses: Designing performance and progress indicators", 20 September 1993 (1993-09-20), HUMAN COMPUTER INTERACTION, SPRINGER BERLIN HEIDELBERG, BERLIN, HEIDELBERG, PAGE(S) 329 - 337, XP019177811, ISBN: 978-3-540-57312-8 * the whole document *

## Description

### TECHNICAL FIELD

Embodiments of the present invention relate to the multimedia field, and more specifically, to a method and a device for visually presenting data preloading.

### BACKGROUND

At present, a user may watch/read different kinds of digital media content, for example, a movie and TV series, a music video, or an ebook, by using various electronic devices. However, because of a limitation of network bandwidth, when watching/reading the media content, the user sometimes has to wait for buffering because of a low network speed. To reduce time for waiting for buffering, in a current technology, a method for preloading digital media content that has not been played is used: The media content that has not been played is stored in a system in advance in order to be smoothly played subsequently, and a data volume that is loaded in advance is presented by using a loading progress bar. However, the user can know only a total loading volume, instead of easily knowing a loading speed, by using the loading progress bar; therefore, the user cannot make a decision, for example, on whether to continue watching/reading or to watch/read later, and user experience is poor.

Documents EP 2 525 281 A1, US 2013 / 235 044 A1, "Return to YouTube's old way of buffering full videos" and "Beyond bars and hour glasses: Designing performance and progress indicators" disclose progress indicators for displaying the progress of a process on a computer.

Document US 2007/192723 A1 describes techniques for showing the progress of an automated computer process. Graphical status displays show time-based information, such as rate and estimated time to completion. A remaining time indicator is shown as a time scale for the graphical completion indicator.

### SUMMARY

Embodiments of the present invention provide a method with the features of claim 1 and a device with the features of claim 5.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 shows a schematic flowchart of a method for visually presenting data preloading according to an embodiment of the present invention;
FIG. 2 shows a schematic diagram of a method for visually presenting data preloading according to an embodiment of the present invention;
FIG. 3 shows a schematic block diagram of a device for visually presenting data preloading according to an embodiment of the present invention; and
FIG. 4 shows another schematic block diagram of a device for visually presenting data preloading according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention.

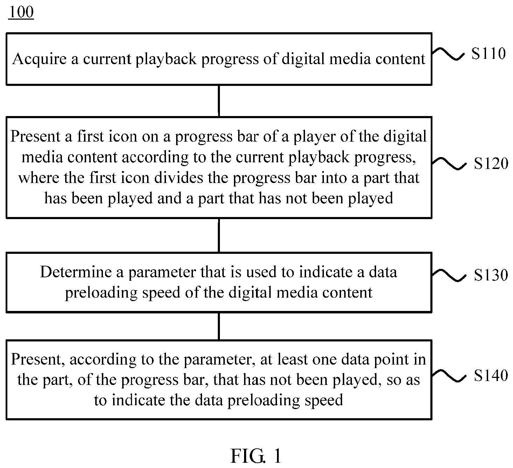

FIG. 1 shows a method 100 for visually presenting data preloading. The method 100 includes the following steps:

S110. Acquire a current playback progress of digital media content.

S120. Present a first icon on a progress bar of a player of the digital media content according to the current playback progress, where the first icon divides the progress bar into a part that has been played and a part that has not been played.

S130. Determine a parameter that is used to indicate a data preloading speed of the digital media content.

S140. Present, according to the parameter, at least one data point in the part, of the progress bar, that has not been played, so as to indicate the data preloading speed.

According to the method for visually presenting data preloading provided in this embodiment of the present invention, a parameter that is used to indicate a data preloading speed is acquired, and at least one data point is presented according to the parameter, which enables a user to know a current data-loading speed and helps the user make a further decision, for example, to continue watching/reading or to watch/read later, so that user experience can be effectively improved.

The digital media content involved in this embodiment of the present invention includes but is not limited to a video, audio, and an electronic book.

In S110, the current playback progress of the digital media content is acquired. Specifically, the current playback progress refers to a location of a current frame of the digital media content in an entire length of the digital media content, where content before the current frame is content that has been played, and content after the current frame is content that has not been played.

It should be understood that content represented by the current playback progress is not necessarily content that the user actually watches/reads. For example, in the content represented by the current playback progress, there may be content played by the user in a manner of fast forwarding, rewinding, or dragging the progress bar.

In S120, the first icon is presented on the progress bar of the player of the digital media content according to the current playback progress of the data media content, where the first icon is used to divide the progress bar into the part that has been played and the part that has not been played. The progress bar of the player of the digital media content is used to indicate a played progress and a to-be-played progress that are of the digital media content.

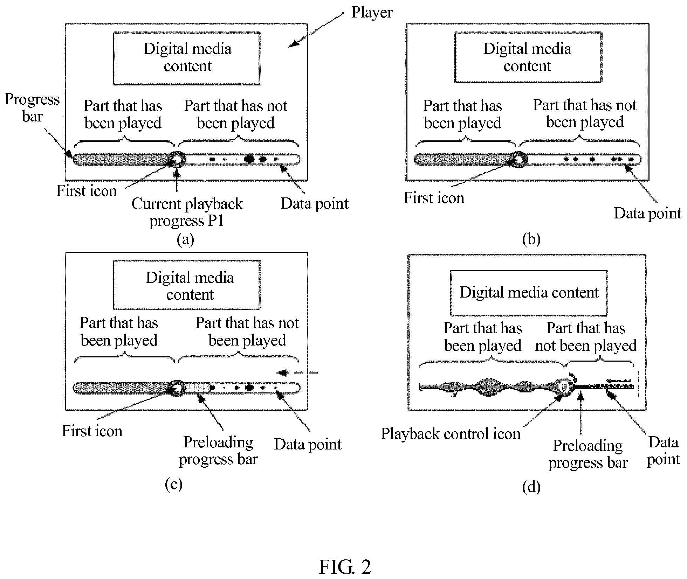

Specifically, as shown in FIG. 2(a), PI is the current playback progress of the digital media content, and the first icon is presented in the location PI, so as to divide the progress bar into the part that has been played and the part that has not been played.

In S130, the parameter that is used to indicate the data preloading speed of the digital media content is determined. Specifically, the parameter may be a data volume loaded per unit time in the part, of the digital media content, that has not been played, or may be time required for loading a unit data volume, which is not limited in this embodiment of the present invention.

It should be understood that the data preloading speed involved in this embodiment of the present invention is not completely equivalent to a network speed. Specifically, a current data-preloading speed of the digital media content may be acquired according to a current network speed (or network bandwidth).

In S140, the at least one data point is presented, according to the parameter, in the part, of the progress bar, that has not been played, so as to indicate the data preloading speed. Specifically, a manner of presenting the at least one data point in the part that has not been played may indicate the parameter that is used to indicate the data preloading speed.

In this example, according to different types of the acquired parameter that is used to indicate the data preloading speed, for example, a volume that is loaded per unit time and time required for loading a unit data volume, the at least one data point may have different presentation manners in the part, of the progress bar, that has not been played.

Optionally, in this example of the present invention, the parameter is a data volume that is preloaded per unit time.

The step S140 of the presenting, according to the parameter, at least one data point in the part, of the progress bar, that has not been played includes:

S141. Present the at least one data point in the part that has not been played, where a size of each data point is used to represent a size of a data volume that is preloaded per unit time corresponding to each data point.

Specifically, a larger data volume that is preloaded per unit time indicates a larger data point, and a smaller data volume that is preloaded per unit time indicates a smaller data point.

It should be understood that the data point may be of various shapes, for example, a circle, a square, or another shape, which is not limited in this embodiment of the present invention.

Optionally, in this example, the at least one data point is arranged at equal space in the part, of the progress bar, that has not been played.

Specifically, at an interval of a unit time, a data point is presented in the part, of the progress bar, that has not been played, where the data point is used to indicate a data volume that is preloaded within the unit time.

As shown in FIG. 2(a), M data points are presented in the part, of the progress bar, that has not been played. A size of each data point represents a size of a data volume that is preloaded within a unit time corresponding to the data point, and absolute distances between adjacent data points are the same, that is, distances between centers of data points are the same. As an example instead of a limitation, M is 6 in FIG. 2(a).

Optionally, in this example, the parameter is time required for loading a unit data volume.

The step S140 of the presenting, according to the parameter, at least one data point in the part, of the progress bar, that has not been played includes:

S142. Present the at least one data point in the part that has not been played, where a distance between adjacent data points represents the time required for loading the unit data volume.

Specifically, a shorter time required for loading the unit data volume indicates a shorter distance between adjacent data points, and vice versa.

Optionally, in this example, the at least one data point has an equal size.

Specifically, a size of each data point of the at least one data point represents a unit data volume.

Specifically, as shown in FIG. 2(b), N data points are presented in the part, of the progress bar, that has not been played, absolute distances (distances between centers of data points) between two adjacent data points are not completely the same, and sizes of the data points are the same. As an example instead of a limitation, N is 6 in FIG. 2(b).

It should be understood that S141 (as shown in FIG. 2(b)) may be seen as acquiring a data volume that is preloaded per unit time and presenting, at an equal time interval (the unit time), the at least one data point in the part, of the progress bar, that has not been played, where the size of each data point represents the size of the data volume that is preloaded within a corresponding time interval. S142 (as shown in FIG. 2(b)) may be seen as acquiring the time required for loading the unit data volume, that is, measuring duration each time a unit data volume is loaded; and presenting a data point each time a unit data volume completes loading, where by analogy, in the finally presented at least one data point, a distance between adjacent data points indicates duration during which a corresponding unit data volume is loaded. Both the two methods for presenting the data points described in S141 and S142 can enable the user to know a data preloading speed that is in a period of time.

In example, the at least one data point presented in the part, of the progress bar, that has not been played may be static or dynamic, which is not limited in this embodiment of the present invention.

In a process of playing the digital media content, data preloading may be performed for content that has not been played, and the preloaded content is temporarily stored in a system.

Optionally, in this example, a preloading progress bar is further presented in the part, of the progress bar of the digital media content, that has not been played.

The method 100 further includes the following step:

S150. Present in the part, of the progress bar, that has not been played that the at least one data point successively integrates into the preloading progress bar from right to left.

Specifically, the preloading progress bar is used to indicate a preloading progress, where the preloading progress refers to a location of the advance data loading in the entire length of the digital media content.

Specifically, as shown in FIG. 2(c), the preloading progress bar is presented in the part, of the progress bar, that has not been played; and the at least one data point successively moves from the right side of the part, of the progress bar, that has not been played to the right side of the preloading progress bar, and successively integrates into the preloading progress bar. Equivalently, with integration of the data point, the preloading progress bar gets longer accordingly, where an increased length is corresponding to a size of an integrated data point. That is, as the data point integrates into the preloading progress bar, the preloading progress bar is continuously updated and gets longer.

Optionally, in this example, the method 100 further includes the following step:

S160. When each data point integrates into the preloading progress bar, present a second blinking icon in a location on which each data point is located.

Optionally, in this example, the method 100 further includes the following step:

S170. Present a third icon, where a rotation speed of the third icon is used to indicate the data preloading speed of the digital media content.

Optionally, in this example, a color of the third icon changes as the rotation speed of the third icon changes.

The third icon may be specifically a playback control icon of the player. As shown in FIG. 2(d), the playback control icon is presented in a current playback location, the playback control icon may rotate around a center point according to the data preloading speed, and the rotation speed is corresponding to the preloading speed. Specifically, for a data volume that is loaded per unit time, a larger data volume indicates faster rotation of the playback control icon; a smaller data volume indicates slower rotation of the playback control icon. Further, a different color may be further presented on the playback control icon according to the rotation speed.

Further, the part, of the progress bar, that has been played also presents different thickness according to the size of the data volume that is preloaded per unit time. As shown in FIG. 2(d), a larger data volume that is preloaded per unit time indicates a thicker progress bar; a smaller data volume that is preloaded per unit time indicates a thinner the progress bar.

When the user watches/reads the digital media content, the user may know, by means of visual presentation of data preloading provided in this embodiment of the present invention, a current data-preloading speed, so as to accurately determine whether, in a next step, to continue watching/reading, or to wait to watch/read later, or to choose another loading service such as acceleration and cloud loading to continue loading, thereby effectively improving user experience.

According to the method for visually presenting data preloading provided in example, an operator may also intuitively present an advantage of a wideband product to a user. A platform for playing the digital media content may also smoothly recommend a service such as acceleration and cloud loading to the user.

Optionally, the method 100 for visually presenting data preloading provided in this example may be executed, for example, by a digital media content playback processor.

Specifically, when a user opens digital media content to watch/read, the digital media content playback processor begins to preload a part, of the digital media content, that has not been played; the processor acquires, according to a current network speed, a parameter that is used to indicate a data preloading speed of the digital media content, for example, a volume that is loaded per unit time or loading time required for loading a unit data volume; the processor presents at least one data point on a progress bar of a player of the digital media content according to the acquired parameter, and a specific presentation manner may be any one of or a combination of FIG. 2(a) to FIG. 2(d), which is not limited in this example, so that the user can know the data preloading speed by using the at least one data point.

It should be understood that the at least one data point involved in this embodiment of the present invention may be presented in a location of the part, of the progress bar of the player of the digital media content, that has not been played, or may be presented in another location of a user interface of the player, which is not limited in this embodiment of the present invention, provided that the user can know the current data-preloading speed in a process of watching/reading reading the digital media content.

It should be further understood that the data preloading speed involved in this embodiment of the present invention includes but is not limited to a data preloading speed at a current moment (a moment corresponding to a current playback frame), a data preloading speed within a preset period of time, and the like.

It should be further understood that in this example, provided that the parameter that is used to indicate the data preloading speed is acquired, for example, a size of a data volume that is preloaded per unit time or time required for loading a unit data volume is acquired, the at least one data point can be presented according to the parameter. It is not necessary to acquire a data preloading speed within an entire period of time.

Therefore, according to the method for visually presenting data preloading provided in this example, a parameter that is used to indicate a data preloading speed is acquired, and at least one data point is presented according to the parameter, which enables a user to know a current data-loading speed and helps the user make a further decision, for example, to continue watching/reading or to watch/read later, so that user experience can be effectively improved.

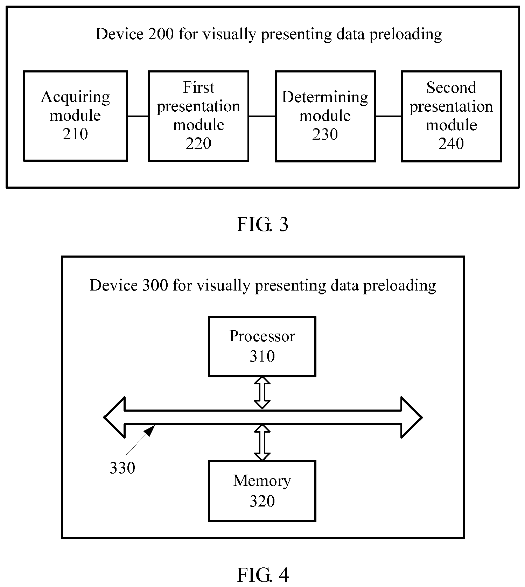

The foregoing describes in detail the method for visually presenting data preloading according to the examples with reference to FIG. 1 and FIG. 2, and the following describes a device for visually presenting data preloading according to the embodiments of the present invention with reference to FIG. 3 and FIG. 4.

FIG. 3 shows a schematic block diagram of a device 200 for visually presenting data preloading according to an example, As shown in FIG. 3, the device 200 includes:
an acquiring module 210, configured to acquire a current playback progress of digital media content;
a first presentation module 220, configured to present a first icon on a progress bar of a player of the digital media content according to the current playback progress acquired by the acquiring module, where the first icon divides the progress bar into a part that has been played and a part that has not been played;
a determining module 230, configured to determine a parameter that is used to indicate a data preloading speed of the digital media content; and
a second presentation module 240, configured to present, according to the parameter determined by the determining module, at least one data point in the part, of the progress bar, that has not been played and is presented by the first presentation module, so as to indicate the data preloading speed.

Therefore, according to the device for visually presenting data preloading provided in this example, a parameter that is used to indicate a data preloading speed is acquired, and at least one data point is presented according to the parameter, which enables a user to know a current data-loading speed and helps the user make a further decision, for example, to continue watching/reading or to watch/read later, so that user experience can be effectively improved.

Optionally, in this embodiment of the present invention, a preloading progress bar is further presented in the part, of the progress bar, that has not been played and is presented by the first presentation module 220.

The device 200 further includes:
a third presentation module 250, configured to present in the part, of the progress bar, that has not been played that the at least one data point successively integrates into the preloading progress bar from right to left.

Optionally, in this embodiment of the present invention, the parameter determined by the determining module 230 is a data volume that is preloaded per unit time.

The second presentation module 240 is specifically configured to present the at least one data point in the part that has not been played, where a size of each data point is used to represent a size of a data volume that is preloaded per unit time corresponding to each data point.

Optionally, in this embodiment of the present invention, the at least one data point is arranged at equal space in the part, of the progress bar, that has not been played.

Optionally, in this example, the parameter determined by the determining module 230 is time required for loading a unit data volume.

The second presentation module 240 is specifically configured to present the at least one data point in the part that has not been played, where a distance between adjacent data points represents the time required for loading the unit data volume.

Optionally, in this embodiment of the present invention, the at least one data point has an equal size.

Optionally, in this example, the device 200 further includes:
a fourth presentation module 260, configured to: when each data point integrates into the preloading progress bar, present a second blinking icon in a location on which each data point is located.

Optionally, in this example, the device 200 further includes:
a fifth presentation module 270, configured to present a third icon, where a rotation speed of the third icon is used to indicate the data preloading speed of the digital media content.

Optionally, in this example, a color of the third icon changes as the rotation speed of the third icon changes.

Therefore, according to the device for visually presenting data preloading provided in this example, a parameter that is used to indicate a data preloading speed is acquired, and at least one data point is presented according to the parameter, which enables a user to know a current data-loading speed and helps the user make a further decision, for example, to continue watching/reading or to watch/read later, so that user experience can be effectively improved.

It should be understood that the foregoing and other operations and/or functions of modules in the device 200 for visually presenting data preloading according to this embodiment of the present invention are respectively used to achieve corresponding procedures of the methods in FIG. 1 and FIG. 2. For brevity, details are not described herein again.

It should be further understood that an embodiment of the present invention further provides a device 200 for visually presenting data preloading, which may be, for example, a smart terminal such as a video player or an ebook player that has a function of visually presenting data preloading.

As shown in FIG. 4, an example further provides a device 300 for visually presenting data preloading. The device 300 includes a processor 310, a memory 320, and a bus system 330. The processor 310 and the memory 320 are connected by using the bus system 330. The memory 320 is configured to store an instruction, and the processor 310 is configured to execute the instruction stored in the memory 320. The processor 310 is configured to: acquire a current playback progress of digital media content; present a first icon on a progress bar of a player of the digital media content according to the current playback progress, where the first icon divides the progress bar into a part that has been played and a part that has not been played; determine a parameter that is used to indicate a data preloading speed of the digital media content; and present, according to the parameter, at least one data point in the part, of the progress bar, that has not been played, so as to indicate the data preloading speed.

Therefore, according to the device for visually presenting data preloading provided in this example, a parameter that is used to indicate a data preloading speed is acquired, and at least one data point is presented according to the parameter, which enables a user to know a current data-loading speed and helps the user make a further decision, for example, to continue watching/reading or to watch/read later, so that user experience can be effectively improved.

Optionally, as an embodiment, a preloading progress bar is further presented in the part, of the progress bar, that has not been played. The processor 310 is configured to present in the part, of the progress bar, that has not been played that the at least one data point successively integrates into the preloading progress bar from right to left.

As an embodiment, the parameter is a data volume that is preloaded per unit time. The processor 310 is configured to present the at least two data points one data point in the part that has not been played, where a size of each data point is used to represent a size of a data volume that is preloaded per unit time corresponding to each data point.

As an embodiment, the at least one data point is arranged at equal space in the part, of the progress bar, that has not been played.

Optionally, as an example, the parameter is time required for loading a unit data volume.

The processor 310 is configured to present the at least one data point in the part that has not been played, where a distance between adjacent data points represents the time required for loading the unit data volume.

Optionally, as an example, the at least one data point has an equal size.

Optionally, as an embodiment, the processor 310 is configured to: when each data point integrates into the preloading progress bar, present a second blinking icon in a location on which each data point is located.

Optionally, as an embodiment, the processor 310 is configured to present a third icon, where a rotation speed of the third icon is used to indicate the data preloading speed of the digital media content.

Optionally, as an embodiment, a color of the third icon changes as the rotation speed of the third icon changes.

It should be understood that in this embodiment of the present invention, the processor 310 may be a central processing unit (Central Processing Unit, "CPU" for short), or the processor 310 may be another general purpose processor, a digital signal processor (DSP), an application-specific integrated circuit (ASIC), a field programmable gate array (FPGA), or another programmable logical device, discrete gate or transistor logical device, discrete hardware component, or the like. A general purpose processor may be a microprocessor or the processor may be any conventional processor and the like.

The memory 320 may include a read-only memory and a random access memory, and provides an instruction and data to the processor 310. A part of the memory 320 may further include a non-volatile random access memory. For example, the memory 320 may further store information about a device type.

The bus system 330 may further include a power bus, a control bus, a status signal bus, and the like, in addition to including a data bus. However, for clear description, various types of buses in the figure are marked as the bus system 330.

In an implementation process, steps in the foregoing methods may be completed by using an integrated logic circuit of hardware in the processor 310 or a software instruction. Steps of the methods disclosed with reference to the embodiments of the present invention may be directly executed and completed by means of a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 320, and the processor 310 reads information in the memory 320 and completes the steps in the foregoing methods in combination with hardware of the processor. To avoid repetition, details are not described herein again.

Therefore, according to the device for visually presenting data preloading provided in this embodiment of the present invention, a parameter that is used to indicate a data preloading speed is acquired, and at least two data points is presented according to the parameter, which enables a user to know a current data-loading speed and helps the user make a further decision, for example, to continue watching/reading or to watch/read later, so that user experience can be effectively improved.

It should be understood that the device 300 for visually presenting data preloading according to this embodiment of the present invention may be corresponding to the device 200 for visually presenting data preloading provided in the embodiments of the present invention. The foregoing and other operations and/or functions of modules in the device 300 are respectively used to achicvc corresponding procedures of the methods in FIG. 1 and FIG. 2. For brevity, details are not described herein again.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for visually presenting data preloading, comprising:
acquiring (S110) a current playback progress of digital media content;
presenting (S120) a first icon on a progress bar of a player of the digital media content according to the current playback progress, wherein the first icon divides the progress bar into a part that has been played and a part that has not been played; and
determining (S130) a parameter that is used to indicate a data preloading speed of the digital media content, wherein the parameter is a data volume preloaded within a unit time;
**characterized by**
presenting (S140), according to the parameter, a plurality of data points in the part of the progress bar, that has not been played, so as to indicate the data preloading speed,
wherein the plurality of data points are arranged at equal space with an interval of the unit time, and
wherein for each data point a size of the data point represents a size of a data volume that is preloaded within the unit time, which means that a larger data point indicates a larger data volume that is preloaded within the unit time and a smaller data point indicates a smaller data volume that is preloaded within the unit time.

2. The method according to claim 1, wherein a preloading progress bar is further presented in the part, of the progress bar, that has not been played; and
the method further comprises:
presenting in the part, of the progress bar, that has not been played that the plurality of data points successively integrates into the preloading progress bar from right to left.

3. The method according to claim 2, wherein the method further comprises:
when each data point integrates into the preloading progress bar, presenting a second blinking icon in a location on which each data point is located.

4. A device (200, 300) for visually presenting data preloading, comprising:
an acquiring module (210), configured to acquire a current playback progress of digital media content;
a first presentation module (220), configured to present a first icon on a progress bar of a player of the digital media content according to the current playback progress acquired by the acquiring module (210), wherein the first icon divides the progress bar into a part that has been played and a part that has not been played; and
a determining module (230), configured to determine a parameter that is used to indicate a data preloading speed of the digital media content, wherein the parameter determined by the determining module (230) is a data volume preloaded within a unit time;
**characterized by**
a second presentation module (240), configured to present, according to the parameter determined by the determining module (230), a plurality of data points in the part of the progress bar, that has not been played and is presented by the first presentation module (220), so as to indicate the data preloading speed,
wherein the plurality of data points are arranged at equal space with an interval of the unit time, and
wherein for each data point a size of the data point represents a size of a data volume that is preloaded within the unit time, which means that a larger data point indicates a larger data volume that is preloaded within the unit time and a smaller data point indicates a smaller data volume that is preloaded within the unit time.

5. The device (200, 300) according to claim 4, wherein a preloading progress bar is further presented in the part, of the progress bar, that has not been played and is presented by the first presentation module (220); and
the device (200, 300) further comprises:
a third presentation module, configured to present in the part, of the progress bar, that has not been played that the plurality of data points successively integrates into the preloading progress bar from right to left.

## Patentansprüche

1. Verfahren zur visuellen Darstellung des vorzeitigen Ladens von Daten, das Folgendes umfasst:
Erfassen (S110) eines aktuellen Wiedergabefortschritts von digitalem Medieninhalt;
Darstellen (S120) eines ersten Symbols auf einem Fortschrittsbalken eines Players des digitalen Medieninhalts entsprechend dem aktuellen Wiedergabefortschritt, wobei das erste Symbol den Fortschrittsbalken in einen Teil, der bereits abgespielt wurde, und einen Teil, der noch nicht abgespielt wurde, teilt; und
Bestimmen (S130) eines Parameters, der verwendet wird, um eine Geschwindigkeit des vorzeitigen Ladens von Daten des digitalen Medieninhalts anzuzeigen, wobei der Parameter ein Datenvolumen ist, das innerhalb einer Einheitszeit vorzeitig geladen wird;
**gekennzeichnet durch**
Darstellen (S140), entsprechend dem Parameter, von mehreren Datenpunkten in dem Teil des Fortschrittsbalkens, der noch nicht abgespielt wurde, um die Geschwindigkeit des vorzeitigen Ladens von Daten anzuzeigen,
wobei die mehreren Datenpunkte bei einem gleichen Abstand mit einem Intervall der Einheitszeit angeordnet sind, und
wobei für jeden Datenpunkt eine Größe des Datenpunkts eine Größe eines Datenvolumens darstellt, das innerhalb der Einheitszeit vorzeitig geladen wird, was bedeutet, dass ein größerer Datenpunkt ein größeres Datenvolumen anzeigt, das innerhalb der Einheitszeit vorzeitig geladen wird, und dass ein kleinerer Datenpunkt ein kleineres Datenvolumen anzeigt, das innerhalb der Einheitszeit vorzeitig geladen wird.

2. Verfahren nach Anspruch 1, wobei ein Fortschrittsbalken für vorzeitiges Laden ferner in dem Teil des Fortschrittsbalkens dargestellt wird, der noch nicht abgespielt wurde; und
wobei das Verfahren ferner Folgendes umfasst:
Darstellen, in dem Teil des Fortschrittsbalkens, der noch nicht abgespielt wurde, dass die mehreren Datenpunkte von rechts nach links nacheinander in den Fortschrittsbalken für vorzeitiges Laden integriert werden.

3. Verfahren nach Anspruch 2, wobei das Verfahren ferner Folgendes umfasst:
wenn jeder Datenpunkt in den Fortschrittsbalken für vorzeitiges Laden integriert wird, Darstellen eines zweiten, blinkenden Symbols an einer Stelle, an der sich jeder Datenpunkt befindet.

4. Vorrichtung (200, 300) zur visuellen Darstellung des vorzeitigen Ladens von Daten, die Folgendes umfasst:
ein Erfassungsmodul (210), ausgelegt zum Erfassen eines aktuellen Wiedergabefortschritts von digitalem Medieninhalt;
ein erstes Darstellungsmodul (220), ausgelegt zum Darstellen eines ersten Symbols auf einem Fortschrittsbalken eines Players des digitalen Medieninhalts entsprechend dem durch das Erfassungsmodul (210) erfassten aktuellen Wiedergabefortschritt, wobei das erste Symbol den Fortschrittsbalken in einen Teil, der bereits abgespielt wurde, und einen Teil, der noch nicht abgespielt wurde, teilt; und
ein Bestimmungsmodul (230), ausgelegt zum Bestimmen eines Parameters, der verwendet wird, um eine Geschwindigkeit des vorzeitigen Ladens von Daten des digitalen Medieninhalts anzuzeigen, wobei der durch das Bestimmungsmodul (230) bestimmte Parameter ein Datenvolumen ist, das innerhalb einer Einheitszeit vorzeitig geladen wird;
**gekennzeichnet durch**
ein zweites Darstellungsmodul (240), ausgelegt zum Darstellen, entsprechend dem durch das Bestimmungsmodul (230) bestimmten Parameter, von mehreren Datenpunkten in dem Teil des Fortschrittsbalkens, der noch nicht abgespielt wurde und der durch das erste Darstellungsmodul (220) dargestellt wird, um so eine Geschwindigkeit des vorzeitigen Ladens von Daten anzuzeigen,
wobei die mehreren Datenpunkte bei einem gleichen Abstand mit einem Intervall der Einheitszeit angeordnet sind, und
wobei für jeden Datenpunkt eine Größe des Datenpunkts eine Größe eines Datenvolumens darstellt, das innerhalb der Einheitszeit vorzeitig geladen wird, was bedeutet, dass ein größerer Datenpunkt ein größeres Datenvolumen anzeigt, das innerhalb der Einheitszeit vorzeitig geladen wird, und dass ein kleinerer Datenpunkt ein kleineres Datenvolumen anzeigt, das innerhalb der Einheitszeit vorzeitig geladen wird.

5. Vorrichtung (200, 300) nach Anspruch 4,
wobei ein Fortschrittsbalken für vorzeitiges Laden ferner in dem Teil des Fortschrittsbalkens dargestellt wird, der noch nicht abgespielt wurde und der durch das erste Darstellungsmodul (220) dargestellt wird; und
wobei die Vorrichtung (200, 300) ferner Folgendes umfasst:
ein drittes Darstellungsmodul, ausgelegt zum Darstellen, in dem Teil des Fortschrittsbalkens, der noch nicht abgespielt wurde, dass die mehreren Datenpunkte von rechts nach links nacheinander in den Fortschrittsbalken für vorzeitiges Laden integriert werden.

## Revendications

1. Procédé pour présenter visuellement un pré-chargement de données, comprenant :
l'acquisition (S110) d'un progrès de lecture actuel de contenu multimédia numérique ;
la présentation (S 120) d'une première icône sur une barre de progrès d'un lecteur du contenu multimédia numérique selon le progrès de lecture actuel, dans lequel la première icône divise la barre de progrès en une partie qui a été lue et une partie qui n'a pas été lue ; et
la détermination (S 130) d'un paramètre qui est utilisé pour indiquer une vitesse de pré-chargement de données du contenu multimédia numérique, dans lequel le paramètre est un volume de données pré-chargé au sein d'un temps unitaire ;
**caractérisé par**
la présentation (S 140), selon le paramètre, d'une pluralité de points de données, dans la partie de la barre de progrès qui n'a pas été lue, afin d'indiquer la vitesse de pré-chargement de données,
dans lequel la pluralité de points de données sont agencés à un espace égal avec un intervalle du temps unitaire, et
dans lequel, pour chaque point de données, une taille du point de données représente une taille d'un volume de données qui est pré-chargé au sein du temps unitaire, ce qui signifie qu'un point de données plus grand indique un volume de données plus grand qui est pré-chargé au sein du temps unitaire et un point de données plus petit indique un volume de données plus petit qui est pré-chargé au sein du temps unitaire.

2. Procédé selon la revendication 1, dans lequel une barre de progrès de pré-chargement est en outre présentée, dans la partie de la barre de progrès qui n'a pas été lue ; et
le procédé comprend en outre :
la présentation, dans la partie de la barre de progrès qui n'a pas été lue, que la pluralité de points de données s'intègre successivement dans la barre de progrès de pré-chargement, de droite à gauche.

3. Procédé selon la revendication 2, dans lequel le procédé comprend en outre :
lorsque chaque point de données s'intègre dans la barre de progrès de pré-chargement, la présentation d'une seconde icône clignotante dans un emplacement sur lequel chaque point de données est situé.

4. Dispositif (200, 300) pour présenter visuellement un pré-chargement de données, comprenant :
un module d'acquisition (210), configuré pour acquérir un progrès de lecture actuel de contenu multimédia numérique ;
un premier module de présentation (220), configuré pour présenter une première icône sur une barre de progrès d'un lecteur du contenu multimédia numérique selon le progrès de lecture actuel acquis par le module d'acquisition (210), dans lequel la première icône divise la barre de progrès en une partie qui a été lue et une partie qui n'a pas été lue ; et
un module de détermination (230), configuré pour déterminer un paramètre qui est utilisé pour indiquer une vitesse de pré-chargement de données du contenu multimédia numérique, dans lequel le paramètre déterminé par le module de détermination (230) est un volume de données pré-chargé au sein d'un temps unitaire ;
**caractérisé par**
un deuxième module de présentation (240), configuré pour présenter, selon le paramètre déterminé par le module de détermination (230), une pluralité de points de données, dans la partie de la barre de progrès qui n'a pas été lue, et est présentée par le premier module de présentation (220), afin d'indiquer la vitesse de pré-chargement de données,
dans lequel la pluralité de points de données sont agencés à un espace égal avec un intervalle du temps unitaire, et
dans lequel, pour chaque point de données, une taille du point de données représente une taille d'un volume de données qui est pré-chargé au sein du temps unitaire, ce qui signifie qu'un point de données plus grand indique un volume de données plus grand qui est pré-chargé au sein du temps unitaire et un point de données plus petit indique un volume de données plus petit qui est pré-chargé au sein du temps unitaire.

5. Dispositif (200, 300) selon la revendication 4, dans lequel une barre de progrès de pré-chargement est en outre présentée, dans la partie de la barre de progrès qui n'a pas été lue, et est présentée par le premier module de présentation (220) ; et
le dispositif (200, 300) comprend en outre :
un troisième module de présentation, configuré pour présenter, dans la partie de la barre de progrès qui n'a pas été lue, que la pluralité de points de données s'intègre successivement dans la barre de progrès de pré-chargement, de droite à gauche.
